# EUROPÄISCHE PATENTSCHRIFT

(11) **EP 0 557 718 B1**
(45) Veröffentlichungstag und Bekanntmachung des Hinweises auf die Patenterteilung: **18.10.1995**
(21) Anmeldenummer: 93100891.6
(22) Anmeldetag: 21.01.1993
(51) Int. Cl.: C08F 4/602, C08F 10/00

(54) **Katalysator für die Olefinpolymerisation, Verfahren zu seiner Herstellung und seine Verwendung**
Catalyst for olefin polymerisation, process for preparing the same and its sue
Catalyseur pour polymérisation d'oléfines, procédé de sa préparation et son utilisation

(30) Priorität: 24.01.1992 DE 4201850
(43) Veröffentlichungstag der Anmeldung: 01.09.1993
(73) Patentinhaber: HOECHST AKTIENGESELLSCHAFT, 65926 Frankfurt am Main (DE)
(72) Erfinder: Herrmann, Hans-Friedrich, Dr., W-6100 Darmstadt (DE); Bachmann, Bernd, Dr., W-6239 Eppstein/Ts. (DE); Dolle, Volker, Dr., W-6140 Bensheim (DE); Spaleck, Walter, Dr., W-6237 Liederbach (DE)

(56) Entgegenhaltungen:
- EP-A- 0 363 029

## Beschreibung

Die vorliegende Erfindung betrifft einen heterogenen (unlöslichen) Katalysator, der vorteilhaft bei der Olefinpolymerisation eingesetzt werden kann.

Bekannt sind Verfahren zur Herstellung von Polyolefinen mit Hilfe von homogenen Katalysatorsystemen, bestehend aus einer Übergangsmetallkomponente vom Typ eines Metallocens und einer Cokatalysator-Komponente, einer oligomeren Aluminiumverbindung vom Typ eines Aluminoxans (meist Methylaluminoxan), welche bei hoher Aktivität engverteilte Polymere bzw. Copolymere liefern (vgl. EP-A-69 951).

Ein prinzipieller Nachteil dieser löslichen (homogenen) Metallocen-/Methylaluminoxan-Katalysatorsysteme in Verfahren, bei denen das gebildete Polymer als Feststoff anfällt, ist die Ausbildung von starken Belägen an Reaktorwänden und Rührer. Diese Beläge entstehen immer dann durch Agglomeration (Polymer Commun. (1991) 32,58) der Polymerpartikel, wenn das Metallocen, oder Aluminoxan, oder beide gelöst im Suspensionsmedium vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern.

Zur Vermeidung der Belagbildung im Reaktor sind geträgerte Katalysatorsysteme vorgeschlagen worden, bei denen das Metallocen und/oder die als Cokatalysator dienende Aluminiumverbindung auf einem anorganischen Trägermaterial fixiert werden (vgl. EP-A-206 794). Neben der Verwendung eines zusätzlichen Trägermaterials, das im gebildeten Polymerisationsprodukt enthalten ist, haben solche Systeme den Nachteil, daß insbesondere bei der Suspensionspolymerisation weiterhin Reaktorbeläge entstehen.

Unlösliche Aluminoxan-Produkte sind bereits beschrieben worden (J. Am. Chem. Soc., 90 (1968) 3173), ohne daß diese zur Polymerisation verwendet wurden.

EP-A-363 029 beschreibt schwerlösliches Methylaluminoxan, welches zusammen mit einem löslichen Metallocen sowie optional einer weiteren löslichen Aluminiumverbindung als Katalysatorsystem bei der Polymerisation verwendet wird.

Mit diesem Katalysatorsystem entstehen bei der Polymerisation im Suspensions- oder Masseverfahren weiterhin Reaktorbeläge.

Ein weiterer Nachteil bei Polymerisationen mit löslichen Metallocen/Methylaluminoxan-Systemen besteht in den schlechten Schüttdichten der anfallenden Polymerpulver, sowie in teilweise hohen Feinkornanteilen (< 100 µm). Schlechte Schüttdichten bedingen hohe Kosten bei der Ausschleusung des Polymers aus dem Reaktor, erfordern ein aufwendiges Trocknungsverfahren und vermindern zudem die Kapazität des Polymerisationsreaktors; die hohen Feinkornanteile wirken sich insbesondere in den verschiedenen Verfahrensschritten der Weiterverarbeitung des Polymers nachteilig aus.

Ein wesentlicher Anteil der Katalysatorkosten bei der Polymerisation mit homogenen Metallocen-Katalysatorsystemen wird durch das Methylaluminoxan (MAO), bzw. durch dessen Herstellung aus Wasser und Trimethylaluminium bedingt. Die Ausbeute an löslichem MAO wird insbesondere durch das Entstehen unlöslicher Anteile von Methylaluminoxan erniedrigt, welche je nach angestrebtem MAO-Oligomerisationsgrad bis 10 Gew.-% oder mehr betragen. Es wäre daher wünschenswert, die unlöslichen MAO-Nebenprodukte ebenfalls einer technischen Verwendung zuzuführen.

Es bestand somit die Aufgabe ein Polymerisationsverfahren bzw. ein Katalysatorsystem zu finden, das die aus dem Stand der Technik bekannten Nachteile vermeidet.

Überraschenderweise wurde gefunden, daß durch Umsetzung einer Aluminium-Verbindung A, bestehend aus einem speziellen oligomeren Aluminoxan, mit Metallocenen B ein hochaktiver Polymerisationskatalysator entsteht, welcher Reaktorbeläge vollständig verhindert.

Die Erfindung betrifft somit einen Katalysator für die Olefinpolymerisation, bestehend aus dem Reaktionsprodukt eines in aliphatischen und aromatischen Kohlenwasserstoffen unlöslichen Aluminoxans mit mindestens einem Metallocen.

Der gebildete Katalysator ist fest und in aliphatischen Kohlenwasserstoffen wie Hexan oder Dieselöl (Siedefraktion: 100-120°C) und gleichfalls in aromatischen Kohlenwasserstoffen wie Benzol oder Toluol unlöslich (heterogener Katalysator).

Bei dem erfindungsgemäß zu verwendenden Aluminoxan handelt es sich um eine feste Substanz, die ebenfalls in den obengenannten Lösemitteln unlöslich ist. Das feste, unlösliche Aluminoxan entsteht als Nebenprodukt bei der Herstellung von in Toluol löslichen Aluminoxanen aus einer aluminiumorganischen Verbindung AlR₃ und Wasser. In der Verbindung AlR₃ sind die Reste R gleich oder verschieden, bevorzugt gleich, und bedeuten C₁-C₆-Alkyl, C₆-C₁₀-Aryl oder Benzyl. Insbesondere bedeutet R eine Methylgruppe.

Die Herstellung der genannten in Toluol löslichen, oligomeren Aluminoxane kann auf vielfältige Weise erfolgen und ist literaturbekannt (vgl. z.B. Polyhedron 9, 1990, 429).

Bevorzugt werden die unlöslichen Aluminoxane verwendet, die als Nebenprodukte bei solchen Verfahren anfallen, bei denen AlR₃ direkt mit (freiem) Wasser umgesetzt wird. Erfolgt die Bereitstellung des für die Reaktion notwendigen Wassers in Form von ad- oder absorbiertem Wasser, z.B. als Kristallwasser bei der Umsetzung von AlR₃ mit CuSO₄·5H₂O, so ist das als Nebenprodukt gebildete unlösliche Aluminoxan mit Metallsalzen (z.B. CuSO₄) oder anderen Inertmaterialien verunreinigt. Prinzipiell sind jedoch auch solche Nebenprodukte erfindungsgemäß verwendbar.

Die Herstellung von löslichen, oligomeren Aluminoxanen aus AlR₃ und Wasser ist z.B. in der DE-OS 4 004 477 beschrieben. Die dort anfallenden Nebenprodukte werden bevorzugt als erfindungsgemäße, unlösliche Aluminoxane verwendet.

Das in der DE-OS 4 004 477 beschriebene Verfahren läßt sich durch Änderung der Reaktionsstöchiometrie (Erhöhung der zugegebenen Wassermenge) so variieren, daß unlösliche, feste Aluminoxane zum Haupt- bzw. zum alleinigen Reaktionsprodukt werden.

Die erfindungsgemäßen Aluminoxane können ebenfalls nach dem in der EP-A-363 029 beschriebenen Verfahren hergestellt werden.

Die genaue Struktur der erfindungsgemäßen Aluminoxane ist nicht bekannt. Vermutlich handelt es sich um Gemische von Verbindungen unterschiedlicher Zusammensetzung. Die Summenformel der bevorzugt eingesetzten Aluminoxane lautet: AlOₐR_{b} mit 0,5 ≦ a ≦ 1,3 und 0,5 ≦ b ≦ 2. R steht für gleiche oder verschiedene, bevorzugt gleiche, Reste und bedeutet C₁-C₆-Alkyl, C₆-C₁₀-Aryl oder Benyl. Bevorzugt steht R für C₁-C₄-Alkyl, insbesondere Methyl; d.h. besonders bevorzugt ist unlösliches Methylaluminoxan.

Ob ein Aluminoxan für den erfindungsgemäßen Zweck geeignet ist, wird allerdings weniger durch seine Summenformel als vielmehr durch die Tatsache bestimmt, daß es insbesondere in Toluol und Benzol unlöslich sein muß.

Die bislang als Cokatalysator bei Polymerisationen verwendeten Aluminoxane sind zumindest in Toluol, häufig auch in anderen Kohlenwasserstoffen löslich.

Als zweite Ausgangsverbindung zur Herstellung des erfindungsgemäßen Katalysators dient eine Übergangsmetallverbindung in Form eines Metallocens. Bevorzugt wird ein Metallocen mit dem Aluminoxan umgesetzt.

Es können auch mehrere Metallocene und/oder verschiedene Aluminoxane als Reaktanten eingesetzt werden. Die beim Einsatz von mehreren Metallocenen resultierenden Katalysatoren eignen sich insbesondere für die Herstellung sogenannter Reaktorblends.

Einsetzbar ist grundsätzlich jedes Metallocen unabhängig von Struktur und Zusammensetzung. Die Metallocene können sowohl verbrückt als auch unverbrückt sein, gleiche oder verschiedene Liganden aufweisen. Es handelt sich um Verbindungen der Metalle der Gruppen IVb, Vb oder VIb des Periodensystems, z.B. Verbindungen von Titan, Zirkonium, Hafnium, Vanadium, Niob, Tantal, Chrom, Molybdän, Wolfram, bevorzugt von Zirkonium, Hafnium und Titan, insbesondere von Zirkonium.

Solche Metallocene sind bekannt und beispielsweise in folgenden Dokumenten beschrieben: EP-A-336 127, EP-A-336 128, EP-A-387 690, EP-A-387 691, EP-A-302 424, EP-A-129 368, EP-A-320 762, EP-A-284 707, EP-A-316 155, EP-A-351 392, US-A-5 017 714, J. Organomet. Chem., 342 (1988) 21.

Von besonderem Interesse sind Metallocene, speziell Zirkonocene, die Indenylderivate als Liganden tragen. Es handelt sich dabei bevorzugt um die Verbindungen der nachstehenden Formel I 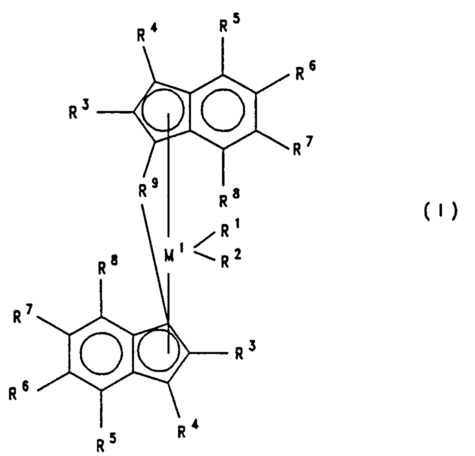
worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, eine OH-Gruppe oder ein Halogenatom bedeuten,
die Reste R³ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂, -SR, -OSiR₃, -SiR₃ oder - PR₂-Rest bedeuten, worin R ein Halogenatom, eine C₁-C₁₀-Alkylgruppe oder eine C₆-C₁₀-Arylgruppe ist, R⁴ bis R⁸ die für R³ genannten Bedeutungen besitzen oder benachbarte Reste R⁴ bis R⁸ mit den sie verbindenden Atomen einen aromatischen oder aliphatischen Ring bilden,
R⁹ 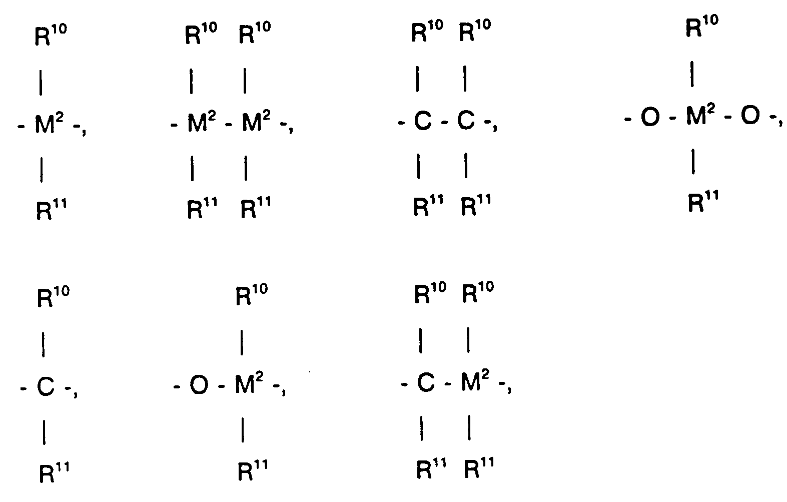 =BR¹⁰, =AlR¹⁰, -Ge-, -Sn-, -O-, -S-, =SO, =SO₂, =NR¹⁰, =CO, =PR¹⁰ oder =P(O)R¹⁰ ist,
wobei
R¹⁰ und R¹¹ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹⁰ und R¹¹ jeweils mit den sie verbindenden Atomen einen Ring bilden und
M² Silizium, Germanium oder Zinn ist.

Die den Verbindungen I entsprechenden 4,5,6,7-Tetrahydroindenylanaloga sind ebenfalls von Bedeutung.

In Formel I gilt bevorzugt, daß
- M¹: Zirkonium ist,
- R¹ und R²: gleich sind und für Methyl oder Chlor, insbesondere Chlor, stehen,
- R³ - R⁸: Wasserstoff oder C₁-C₄-Alkyl bedeuten,
- R⁹: 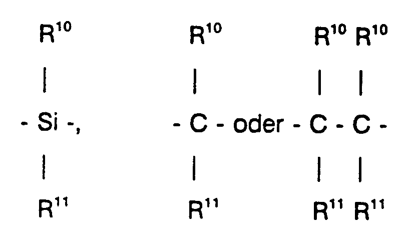 bedeutet, wobei

R¹⁰ und R¹¹ gleich oder verschieden sind und C₁-C₄-Alkyl oder C₆-C₁₀-Aryl bedeuten. Insbesondere sind R¹⁰ und R¹¹ gleich oder verschieden und bedeuten Methyl oder Phenyl.

Die Indenyl- bzw. Tetrahydroindenylliganden in Formel I sind bevorzugt in 2-, 2,4-, 4,7-, 2,6-, 2,4,6-, 2,5,6-, 2,4,5,6- und 2,4,5,6,7-Stellung, insbesondere in 2,4,6-Stellung, substituiert. Die Substitution erfolgt bevorzugt durch eine C₁-C₄-Alkylgruppe wie z. B. Methyl, Ethyl oder Isopropyl. Die 2-Stellung ist bevorzugt durch Methyl substituiert.

Von besonderer Bedeutung sind weiterhin solche Verbindungen I, bei denen die Substituenten in 4- und 5-Stellung der Indenylreste (R⁵ und R⁶) zusammen mit den sie verbindenden Atomen einen Benzolring bilden. Dieses kondensierte Ringsystem kann ebenfalls durch Reste in der Bedeutung von R³ - R⁸ substituiert sein. Beispielhaft für solche Verbindungen I ist Dimethylsilandiylbis(2-methyl-4,5-benzoindenyl)zirkondichlorid zu nennen.

Die Metallocene I sind insbesondere zur Herstellung von hochmolekularen Polyolefinen mit hoher Stereoregularität geeignet.

Die Metallocene I sowie die in den aufgeführten Dokumenten beschriebenen Metallocene können beispielsweise nach folgendem Reaktionsschema hergestellt werden:

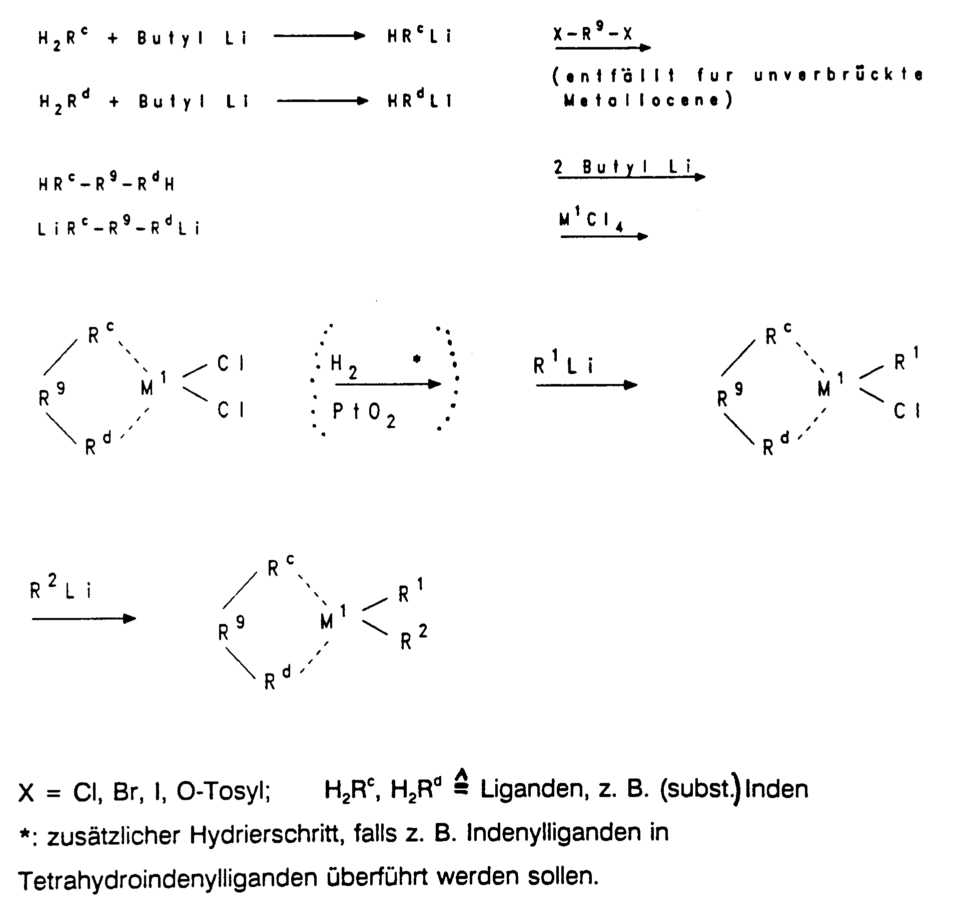

Die Herstellungsverfahren sind grundsätzlich literaturbekannt; vgl. Journal of Organometallic Chem. 288 (1985) 63 - 67, EP-A-320 762 und die zitierten Dokumente bzgl. der dort beschriebenen Metallocene.

Für die Herstellung der Verbindungen I dienen verschieden substituierte Indene als Ausgangsstoffe (H₂R^{c}, H₂R^{d}; vgl. das angeführte Reaktionsschema). Solche Indenderivate sind z. T. bekannt und im Handel erhältlich. Speziell substituierte Indene können nach den im folgenden angegebenen Verfahren hergestellt werden:
a) H₂R^{c}, H₂R^{d} = 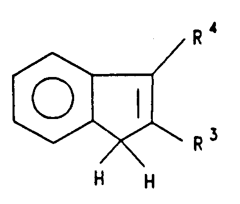 Die Synthese erfolgt gemäß oder analog den nachstehenden Literaturstellen:
   J. Org. Chem., 49 (1984) 4226 - 4237, J. Chem. Soc., Perkin II, 1981, 403 - 408, J. Am. Chem. Soc., 106 (1984) 6702, J. Am. Chem. Soc., 65 (1943) 567, J. Med. Chem., 30 (1987) 1303 - 1308, Chem. Ber. 85 (1952) 78 - 85.
b) H₂R^{c}, H₂R^{d} = 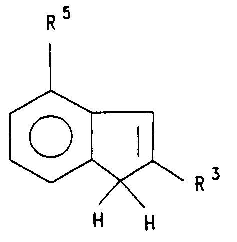 Die Herstellung der als Ausgangssubstanzen dienenden 2,4-substituierten Indene H₂R^{c} bzw. H₂R^{d} ist auf 2 verschiedenen Wegen möglich:
   b1) Als Ausgangsverbindung dient ein Ketoaldehyd der im nachstehenden Reaktionsschema angegebenen Formel, dessen Herstellung bekannt ist (Synthesis 1985, 1058).
      Die Umsetzung dieses Ketoaldehyds mit Cyclopentadien wird in einem inerten Lösemittel in Gegenwart einer Base durchgeführt. Bevorzugt werden Alkohole wie Methanol, Ethanol oder t-Butanol, insbesondere Methanol, verwendet.
      Als Basen lassen sich eine Vielzahl von Verbindungen verwenden. Als Beispiele seien Alkali- und Erdalkalihydroxide, Alkali- und Erdalkalialkoholate, wie Natriummethanolat, Natriumethanolat, Kaliumtertiärbutanolat, Amide wie Lithiumdiisopropylamid oder Amine genannt. Bevorzugt werden Natriumethanolat, Kaliumtertiärbutanolat und Kaliumhydroxid verwendet.
      Die Molverhältnisse der Ausgangsverbindungen einschließlich der verwendeten Base können innerhalb weiter Grenzen schwanken. Bevorzugt ist das Molverhältnis Ketoaldehyd : Cyclopentadien : Base = 1 : 1 - 1,5 : 2 - 3; insbesondere 1 : 1,1 : 2,5.
      Die Reaktionstemperatur beträgt bevorzugt -40 °C bis 100 °C, insbesondere 0 °C - 25 °C.
      Die Reaktionszeiten schwanken in der Regel zwischen 10 min und 100 h, vorzugsweise zwischen 1 h und 30 h.
      Der Substituent in 2-Stellung kann nach Umwandeln des in 4-Position monosubstituierten Indens in das in 4-Position monosubstituierte 2-Indanon nach einer allgemeinen Arbeitsvorschrift (Organic Synthesis, Coll. Vol. V, 1973, 647) durch eine Grignard-Reaktion eingeführt werden. Die anschließende Wasserabspaltung führt zu den 2,4-substituierten Indenen.
      Die 2,4-substituierten Indene fallen als Doppelbindungsisomere an, die direkt für die Synthese der entsprechenden Metallocenkomplexe eingesetzt werden können. 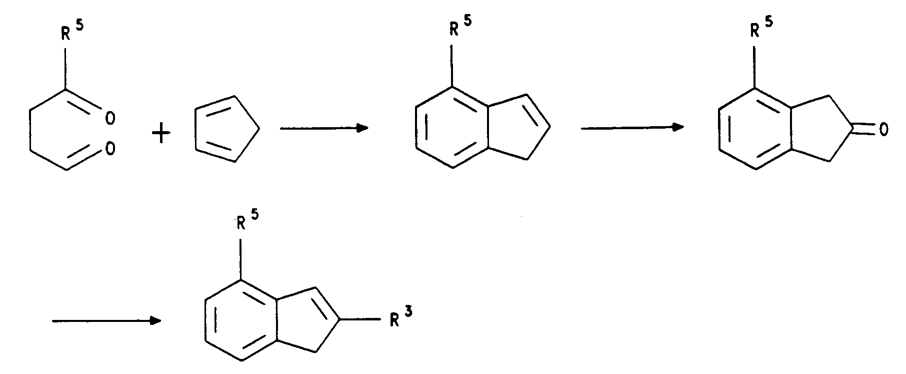
   b2) Eine andere mögliche und vorteilhafte Strategie verfährt nach folgendem Schema:
      Ein in 2-Position substituiertes Benzylhalogenid wird analog eines literaturbekannten Verfahrens (J. Org. Chem. 1958, 23, 1437) durch Umsetzen mit einem entsprechend substituierten Malonsäurediester in den disubstituierten Malonsäurediester umgewandelt.
      Verseifung des Diesters und Decarboxylierung nach den üblichen Verfahren führt zu einem disubstituierten Propionsäurederivat.
      Der Ringschluß zum 2,4-disubstituierten 1-Indanon wird nach Überführen der Carbonsäure in das Carbonsäurechlorid nach gängigen Verfahren durchgeführt (Friedel-Crafts-Reaktion).
      Reduktion des Ketons nach bekannten Methoden und anschließende Wasserabspaltung liefert die 2,4-disubstituierten Indene.
c) H₂R^{c}, H₂R^{d} = 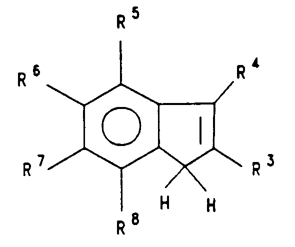 Die Herstellung der Verbindungen H₂R^{c}, H₂R^{d} erfolgt durch Umsetzung einer Verbindung II 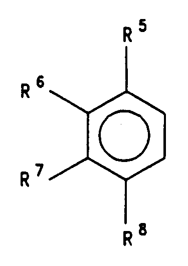 mit einer Verbindung III 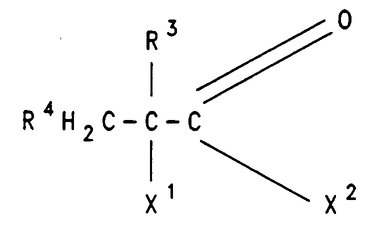 oder deren Anhydrid in Gegenwart eines Friedel-Crafts-Katalysators. Dabei stehen X¹ und X² für eine nucleophile Abgangsgruppe wie z. B. Halogen, Hydroxygruppe oder eine Tosylgruppe; insbesondere für Brom oder Chlor.
   Man erhält die Indanone IV bzw. IVa 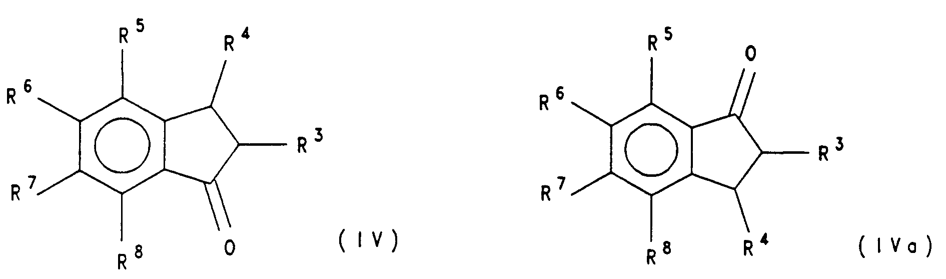 Die Indanone können in Abhängigkeit des Substitutionsmusters am Aromaten in Form zweier Konstitutionsisomere der Formel IV bzw. IVa anfallen. Diese können in reiner Form oder als Gemisch nach literaturbekannten Methoden mit Reduktionsmitteln wie NaBH₄ oder LiAlH₄ zu den entsprechenden Indanolen reduziert und anschließend mit Säuren wie Schwefelsäure, Oxalsäure, p-Toluolsulfonsäure oder auch durch Behandlung mit wasserentziehenden Substanzen wie Magnesiumsulfat, Natriumsulfat, Aluminiumoxid, Kieselgel oder Molekularsiebe zu Indenen der Formel V bzw. Va (H₂R^{c}/H₂R^{d}) dehydratisiert werden (Bull. Soc. Chim. Fr. 11 (1973) 3092; Organomet. 9 (1990) 3098). 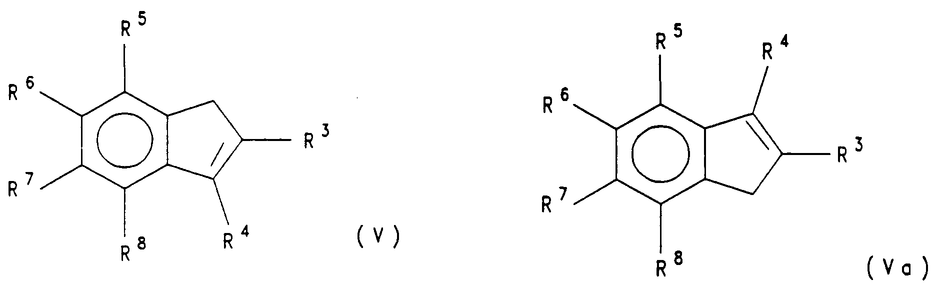 Geeignete Friedel-Crafts-Katalysatoren sind z.B. AlCl₃, AlBr₃, FeCl₃, SbCl₅, SnCl₄, BF₃, TiCl₄, ZnCl₂, H₂SO₄, Polyphosphorsäure, H₃PO₄ oder eine AlCl₃/NaCl-Schmelze; insbesondere AlCl₃.
   Die Ausgangsverbindungen der Formeln II und III sind bekannt und im Handel erhältlich, oder sie lassen sich nach literaturbekannten Verfahren herstellen.
   Die Umsetzung wird in einem inerten Lösemittel durchgeführt. Bevorzugt wird Methylenchlorid oder CS₂ eingesetzt. Sind die Ausgangskomponenten flüssig, kann auch auf ein Lösemittel verzichtet werden.
   Die Molverhältnisse der Ausgangsverbindungen einschließlich des Friedel-Crafts-Katalysators können innerhalb weiter Grenzen schwanken. Bevorzugt ist das Molverhältnis von Verbindung II : III : Katalysator = 1 : 0,5 - 1,5 : 1 - 5; insbesondere 1 : 1 : 2,5 - 3.
   Die Reaktionstemperatur beträgt bevorzugt 0 °C bis 130 °C, insbesondere 25 °C bis 80 °C.
   Die Reaktionszeiten schwanken in der Regel zwischen 30 min und 100 h, vorzugsweise zwischen 2 h und 30 h.
   Bevorzugt wird eine Mischung der Verbindungen II und III vorgelegt und der Friedel-Crafts-Katalysator zudosiert. Auch die umgekehrte Zugabefolge ist möglich.
   Die Indanone der Formel IV bzw. IVa können durch Destillation, Säulenchromatographie oder Kristallisation gereinigt werden.
   Die substituierten Indene können als Doppelbindungsisomere anfallen (V/Va). Diese können von Nebenprodukten durch Destillation, Säulenchromatographie oder Kristallisation gereinigt werden.
   Ausgehend von den Indenen der Formeln V und Va, die als Isomerengemisch eingesetzt werden können, verläuft die Herstellung der Metallocene I nach literaturbekannten Verfahren (vgl. AU-A-31 478/89, J. Organomet. Chem. 342 (1988) 21, EP-A-284 707) entsprechend dem angegebenen Reaktionsschema.
d) H₂R^{c}, H₂R^{d} = 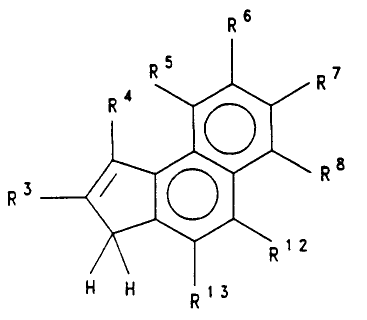 mit R¹² und R¹³ in den Bedeutungen von R⁴ - R⁸ Die Herstellung dieser benzokondensierten Indene und deren weitere Umsetzung zu den Metallocenen I erfolgt gemäß dem nachfolgenden Reaktionsschema:

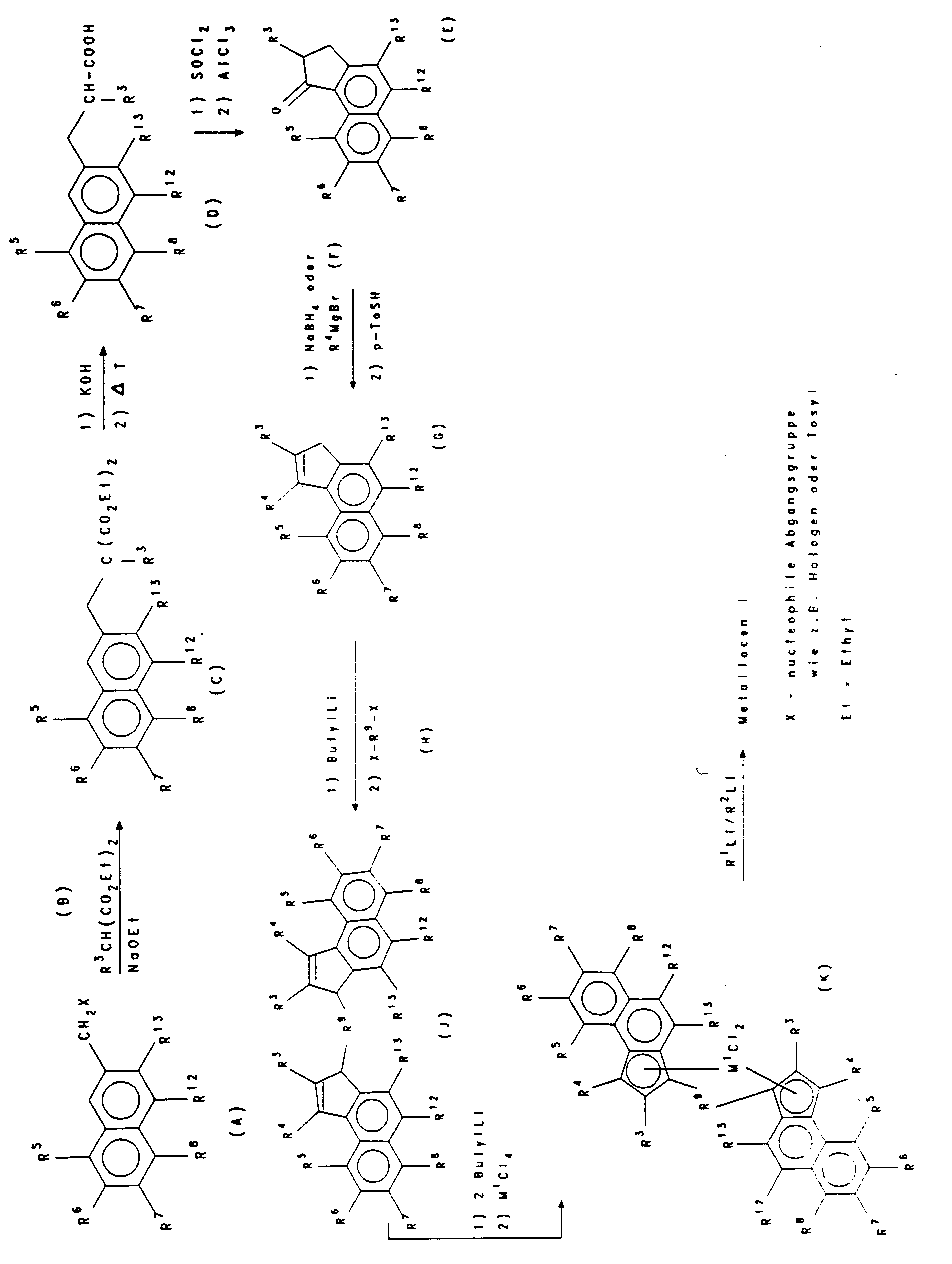

Die Naphthalinderivate der Formel A sind im Handel erhältlich oder können nach literaturbekannten Methoden hergestellt werden ("Friedel Crafts and Related Reactions", Wiley, New York, 1964, Vol. II, S. 659 - 766, Bull. Soc. Chim. Belges, 58 (1949) 87, J. Amer. Chem. Soc. 89 (1967) 2411).

Die Umsetzung zu den Verbindungen der Formel C erfolgt nach literaturbekannten Methoden durch Reaktion mit substituierten Malonsäureestern der Formel B unter basischen Bedingungen wie z. B. in ethanolischen Lösungen von Natriumethanolat (J. Org. Chem. 23 (1958) 1441, J. Am. Chem. Soc. 70 (1948) 3569).

Die Verbindungen der Formel C werden mit Alkalihydroxiden wie Kaliumhydroxid oder Natriumhydroxid nach literaturbekannten Methoden verseift und durch Thermolysieren der entstandenen Dicarbonsäure nach literaturbekannten Methoden zu den Verbindungen der Formel D decarboxyliert (J. Org. Chem. 23 (1958) 1441, J. Am. Chem. Soc. 70 (1948) 3569).

Der Ringschluß zu den substituierten Benzoindanonen der Formel E erfolgt nach literaturbekannten Methoden durch Umsetzung mit Chlorierungsreagentien wie z. B. SOCl₂ zu den entsprechenden Säurechloriden und anschließender Cyclisierung mit einem Frieder-Crafts-Katalysator in einem inerten Solvent, wie z. B. mit AlCl₃ oder Polyphosphorsäure in Methylenchlorid oder CS₂ (Organometallics 9 (1990) 3098, Bull. Soc. Chim. Fr. 3 (1967) 988, J. Org. Chem. 49 (1984) 4226).

Die Umsetzung zu den Benzoindenderivaten der Formel G erfolgt nach literaturbekannten Methoden durch Reduktion mit Natriumborhydrid oder Lithiumaluminiumhydrid in einem inerten Solvent wie z. B. Diethylether oder THF oder durch Alkylierung mit Alkylierungsmitteln der Formel F oder mit Lithiumalkylen zu den entsprechenden Alkoholen und Dehydratisierung der Alkohole unter sauren Bedingungen, wie z. B. mit p-Toluolsulfonsäure oder Oxalsäure oder durch Umsetzung mit wasserentziehenden Substanzen wie Magnesiumsulfat oder Molekularsiebe (Organometallics 9 (1990) 3098, Acta. Chem. Scand. B 30 (1976) 527, J. Amer. Chem. Soc. 65 (1943) 567).

Die Benzoindenderivate der Formel G können auch nach einer anderen, hier nicht näher aufgezeigten Syntheseroute ausgehend von substituierten Naphthalinen in 4 Syntheseschritten aufgebaut werden (Bull. Soc. Chim. Fr. 3 (1967) 988).

Die Herstellung der Ligandsysteme der Formel J und die Umsetzung zu den verbrückten chiralen Metallocenen der Formel K sowie die Isolierung der gewünschten racemischen Form ist im Prinzip bekannt (AU-A-31 478/89, J. Organomet. Chem. 342 (1988) 21, EP 0 284 707, EP 0 320 762). Hierzu wird das Benzoindenderivat der Formel G mit starken Basen wie z. B. Butyllithium in einem inerten Lösemittel deprotoniert und mit einem Reagenz der Formel H zu d em Ligandsystem der Formel J umgesetzt. Dieses wird anschließend mit zwei Äquivalenten einer starken Base wie z. B. Butyllithium in einem inerten Lösemittel deprotoniert und mit dem entsprechenden Metalltetrahalogenid wie z. B. Zirkontetrachlorid in einem geeigneten Lösemittel umgesetzt. Geeignete Lösemittel sind aliphatische und aromatische Lösemittel, wie z. B. Hexan oder Toluol, etherische Lösemittel, wie z. B. Tetrahydrofuran oder Diethylether oder halogenierte Kohlenwasserstoffe, wie z. B. Methylenchlorid. Die Trennung der racemischen und der meso-Form erfolgt durch Extraktion oder Umkristallisation mit geeigneten Lösemitteln.

Die Derivatisierung zu den Metallocenen der Formel I kann nach literaturbekannten Methoden, z. B. durch Umsetzung mit Alkylierungsmitteln wie z. B. Methyllithium erfolgen (Organometallics 9 (1990) 1539, J. Amer. Chem. Soc. 95 (1973) 6263, EP 0 277 004).

Beispielhaft für erfindungsgemäß verwendbare Metallocene seien die folgenden Verbindungen genannt:
Biscyclopentadienylzirkoniumdichlorid,
Biscyclopentadienylzirkoniumdimethyl,
Biscyclopentadienylzirkoniumdiphenyl,
Biscyclopentadienylzirkoniumdibenzyl,
Biscyclopentadienylzirkoniumbistrimethylsilyl,
Bis(methylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1,2,4-trimethylcyclopentadienyl)zirkoniumdichlorid,
Bis(1,2,3,-trimethylcyclopentadienyl)zirkoniumdichlorid,
Bis(pentamethylcyclopentadienyl)zirkoniumdichlorid,
Bisindenylzirkoniumdichlorid
Diphenylmethylen(9-fluorenyl)(cyclopentadienyl)zirkoniumdichlorid,
Dimethylsilyl(9-fluorenyl)(cyclopentadienyl)zirkoniumdichlorid,
Isopropyliden(9-fluorenyl)(cyclopentadienyl)zirkoniumdichlorid,
Dimethylsilyl-bis-1-tetrahydroindenylzirkoniumdichlorid,
Dimethylsilyl-bis-1-(2-methyl-tetrahydroindenyl)-zirkoniumdichlorid,
Dimethylsilyl-bis-1-(2,3,5-trimethyl-cyclopentadienyl)-zirkoniumdichlorid,
Dimethylsilyl-bis-1-(2,4-dimethyl-cyclopentadienyl)-zirkoniumdichlorid,
Dimethylsilyl-bis-1-indenylzirkoniumdichlorid,
Dimethylsilyl-bis-1-indenylzirkoniumdimethyl,
Dimethylgermyl-bis-1-indenylzirkoniumdichlorid,
Dimethylsilyl-bis-1-(2-methyl-indenyl)-zirkoniumdichlorid,
Dimethylsilyl-bis-1-(2-methyl-4-isopropylindenyl)zirkoniumdichlorid
Phenylmethylsilyl-bis-1-(2-methyl-indenyl)-zirkoniumdichlorid,
Dimethylsilyl-bis-1-(2-methyl-4-ethylindenyl)-zirkoniumdichlorid,
Ethylen-bis-1-(4,7-dimethyl-indenyl)zirkoniumdichlorid,
Phenyl(methyl)silyl-bis-1-indenylzirkoniumdichlorid,
Phenyl(vinyl)silyl-bis-1-indenylzirkoniumdichlorid,
Diphenylsilyl-bis-1-indenylzirkoniumdichlorid,
Dimethylsilylbis(1-(2-methyl-4-tertiärbutylindenyl))-zirkondichlorid,
Methylphenylsilylbis(1-(2-methyl-4-isopropylindenyl))zirkondichlorid,
Dimethylsilylbis(1-(2-ethyl-4-methylindenyl))-zirkondichlorid,
Dimethylsilylbis(1-(2,4-dimethylindenyl))-zirkondichlorid,
Dimethylsilylbis(1-(2-methyl-4-ethylindenyl))-zirkondimethyl,
Dimethylsilylbis(2-methyl-4,6-diisopropylindenyl)-zirkondichlorid,
Dimethylsilylbis(2,4,6-trimethylindenyl))-zirkondichlorid,
Methylphenylsilylbis(2-methyl-4,6-diisopropylindenyl)zirkondichlorid,
1,2-Ethandiylbis(2-methyl-4,6-diisopropylindenyl)zirkondichlorid
und Dimethylsilylbis(2-methyl-4,5-benzoindenyl)zirkondichlorid.

Chirale Metallocene werden bei der Herstellung des erfindungsgemäßen Katalysators bevorzugt als Racemat eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochtaktisches Polymeres erzeugen kann. Wird die meso-Form nicht abgetrennt, entsteht neben isotaktischen bzw. syndiotaktischen Polymeren auch ataktisches Polymer. Für bestimmte Anwendungen - weiche Formkörper beispielsweise - oder für die Herstellung von Polyethylentypen kann dies durchaus wünschenswert sein.

Gegenstand der vorliegenden Erfindung ist ferner ein Verfahren zur Herstellung des Katalysators. Diese erfolgt bei einer Temperatur zwischen -10 ° und + 120 °C, bevorzugt bei 20 °C, indem die Aluminiumverbindung (das unlösliche Aluminoxan) mit dem Metallocen zur Umsetzung gebracht wird. Dabei wird die unlösliche Aluminiumverbindung als Suspension mit 1 - 40 Gew.-%, bevorzugt mit 15 - 20 Gew.-%, in einem inerten Suspensionsmittel wie Toluol, n-Decan, Hexan, Dieselöl, Dichlormethan mit dem festen Metallocen oder einer konzentrierten Lösung des Metallocens in einem inerten Lösungsmittel wie Toluol, Hexan, Dichlormethan, bzw. die Aluminiumverbindung als feines Pulver mit einer Lösung des Metallocens in einem inerten Lösungsmittel wie Toluol, Hexan oder Dichlormethan vermischt. Die Umsetzung erfolgt unter intensiver Mischung, z. B. durch Verrühren.

Das molare Verhältnis Al : M¹ (Zentralmetall des Metallocens) beträgt bevorzugt 100 : 1 bis 10000 : 1, insbesondere 100 : 1 bis 2000 : 1. Aber auch jedes andere Verhältnis Al : M¹ (Aluminiumverbindung zu Metallocen) ist realisierbar und wird von der vorliegenden Erfindung umfaßt.

Die Reaktionszeit beträgt in der Regel zwischen 5 und 120 Minuten, bevorzugt 10 - 30 Minuten, unter Inertbedingungen.

Während der Reaktion zur Herstellung des Katalysators treten insbesondere bei der Verwendung von Metallocenen mit Absorptionsmaxima im sichtbaren Bereich Veränderungen in der Farbe der Reaktionsmischung auf, an deren Verlauf sich der Fortgang der Reaktion verfolgen läßt.

Nach Beendigung der Reaktion wird die überstehende Lösung abgetrennt, z. B. durch Filtration oder Dekantieren, und der zurückbleibende Feststoff vorzugsweise 1- bis 5-fach mit einem inerten Suspensionsmittel wie Toluol, n-Decan, Hexan, Dieselöl, Dichlormethan gewaschen. Dieser Waschvorgang (Extraktion) dient zur Entfernung löslicher Bestandteile im gebildeten Katalysator, insbesondere zur Entfernung von nicht umgesetzten und damit löslichen Metallocen.

Vorteilhaft, jedoch nicht notwendigerweise, läßt sich das gesamte Verfahren in einem Druckfilter durchführen, wobei für die Wäsche des Feststoffs auch verschiedenartige inerte Lösungsmittel verwendbar sind. Das Filtrat und die Waschflüssigkeiten sind unabhängig von dem zuvor eingesetzten Metallocen farblos.

Der so hergestellte Katalysator kann im Vakuum getrocknet als Pulver oder noch Lösungsmittel behaftet wieder resuspendiert und als Suspension in einem inerten Suspensionsmittel wie z. B. Toluol, Hexan, Dieselöl, Dichlormethan in das Polymerisationssystem eindosiert werden.

Der erfindungsgemäße Katalysator für die Olefinpolymerisation wird somit in einem separaten Vorgang außerhalb des Polymerisationsreaktors hergestellt.

Gegenstand der vorliegenden Erfindung ist weiterhin ein Verfahren zur Herstellung eines Olefinpolymers durch Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, dadurch gekennzeichnet, daß als Katalysator das erfindungsgemäße Reaktionsprodukt verwendet wird.

Die Polymerisation oder Copolymerisation wird in bekannter Weise in Lösung, in Suspension oder in der Gasphase, kontinuierlich oder diskontinuierlich, ein-oder mehrstufig bei einer Temperatur von -60 bis 200 °C, vorzugsweise 30 bis 80 °C, besonders bevorzugt 50 bis 80 °C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 C-Atomen. R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen, Norbornadien, 1,4,5,8-Dimethano-1,2,3,4,4a,5,8,8a-octahydronaphthalin (DMON). Insbesondere werden Propylen und Ethylen polymerisiert oder copolymerisiert.

Als Molmassenregler und/oder zur Aktivitätserhöhung wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Der erfindungsgemäße Katalysator wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Vor der Zugabe des Katalysators in den Reaktor kann zusätzlich eine andere Aluminiumalkylverbindung wie z. B. Trimethylaluminium, Triethylaluminium, Triisobutylaluminium oder Isoprenylaluminium zur Inertisierung des Polymerisationssystems (z. B. zur Abtrennung von im Olefin vorhandener Katalysatorgifte) in einer Konzentration von 1 bis 0,001 mmol Al pro kg Reaktorinhalt dem Polymerisationssystem zugesetzt werden, wobei die Gesamtmenge der zusätzlichen Aluminiumalkylverbindung maximal 10 mol % Al, bevorzugt maximal 1 mol % Al, bezogen auf die im Katalysator enthaltene Al-Menge erreichen sollte.

Der Einsatz weiterer Substanzen zur Katalyse der Polymerisationsreaktion ist jedoch grundsätzlich nicht erforderlich, d. h. der erfindungsgemäße Kontakt kann - dies ist bevorzugt - als alleiniger Katalysator für die Olefinpolymerisation verwendet werden.

Die Molmasse des gebildeten Polymers kann auch durch Veränderung der Polymerisationstemperatur beeinflußt werden, wobei durch periodische Änderungen oder einen mehrstufigen Prozeß oder den Einsatz mehrerer Metallocene auch breit verteilte Polymere zugänglich sind.

Darüber hinaus wird die mit dem erfindungsgemäßen festen Katalysator erzielte Polymermolmasse durch die Art des verwendeten Metallocens, durch die Aluminiumverbindung sowie durch das Al/M¹-Verhältnis bestimmt.

Das erfindungsgemäße Verfahren (der erfindungsgemäße Katalysator) zeichnet sich in erster Linie dadurch aus, daß bei der Polymerisation die unerwünschten Reaktorbeläge vermieden werden. Ein weiterer Vorteil des Verfahrens besteht in einer günstigen Beeinflussung der Polymermolmasse. Insbesondere bei Propen-Polymerisationen kann die Polymermolmasse gegenüber dem Stand der Technik, d. h. einem Vergleichssystem bestehend aus der Mischung des gleichen Metallocens und löslichem Aluminoxan, durch Verwendung des erfindungsgemäßen Katalysators deutlich verändert werden. So läßt sich bei Metallocenen, welche im Vergleichssystem zu niedrigen Molmassen tendieren, die erreichbare Polymermolmasse anheben, bzw. diese senken bei Metallocenen, welche im Vergleichssystem zu hohen Molmassen tendieren.

Darüberhinaus wird die Kornmorphologie der hergestellten Polymerpulver wesentlich verbessert. Man erhält eine enge Korngrößenverteilung bei gleichzeitiger Vermeidung von Grobanteil > 1500 µm und Feinanteil < 100 µm.

Die nachfolgenden Beispiele sollen die Erfindung näher erläutern:
Alle Glasgeräte wurden im Vakuum ausgeheizt und mit Argon gespült. Alle Operationen wurden unter Ausschluß von Feuchtigkeit und Sauerstoff in Schlenk-Gefäßen durchgeführt. Die verwendeten Lösungsmittel wurden unter Argon jeweils frisch über Na/K-Legierung destilliert und in Schlenk-Gefäßen aufbewahrt.

Die Bestimmung des Al/CH₃-Verhältnisses im Aluminoxan erfolgte durch Zersetzung der Probe mit H₂SO₄ und Bestimmung des Volumens der entstehenden Hydrolysegase unter Normalbedingungen sowie durch komplexometrische Titration des Aluminiums in der dann gelösten Probe nach Schwarzenbach.

Die angegebenen Polymerschmelzpunkte wurde einer DSC-Messung für das 2. Aufschmelzen (10 °/min) entnommen.

Für die Versuche mit der unlöslichen Aluminiumverbindung (Methylaluminoxan), im folgenden P-MAO genannt, wurde eine ca. 17 Gew.-% Suspension in Toluol hergestellt, welche gemäß Aluminium-Bestimmung 86 mg Al/ml enthielt. Eine Analyse dieser im folgenden verwendeten Charge ergab ein molares Verhältnis Al : CH₃ = 1 : 0,97.

Toluol lösliches Methylaluminoxan wurde für die Vergleichsbeispiele als 10 %ige Toluol-Lösung eingesetzt und enthielt gemäß Aluminium-Bestimmung 36 mg Al/ml. Der mittlere Oligomerisationsgrad gemäß Gefrierpunktserniedrigung in Benzol betrug n = 20. Für das Toluol lösliche Methylaluminoxan wurde ein Verhältnis Al : CH₃ = 1 : 1,55 bestimmt.

### Beispiel 1:

8,7 ml der Suspension des P-MAO's in Toluol werden unter Argon in eine G3-Schlenkfritte eingefüllt und abfiltriert. Der verbliebene Feststoff wird in 20 ml eines aromatenfreien inerten Dieselöls (Sdp. 100 bis 120 °C) resuspendiert. Zu dieser Suspension werden 0,5 ml einer 1/500 molaren Lösung von Zirkonocendichlorid (Biscyclopentadienylzirkoniumdichlorid) in abs. Toluol zudosiert und 1/4 h bei 30 °C verrührt. Anschließend wird abfiltriert, der verbliebene Feststoff mit 20 ml Dieselöl gewaschen und für die Polymerisation erneut in 20 ml Dieselöl resuspendiert.

### Polymerisation

Ein trockener 1,5 dm³ Rührreaktor wird zur Entfernung des Sauerstoffs mit Stickstoff gespült und mit 0,9 dm³ eines inerten Dieselöls (Sdp. 100 - 120 °C) befüllt. Nach Spülen mit Ethylen wird auf 70 °C temperiert und bei einem Druck von 7 bar Ethylen die Katalysator-Suspension ohne Einbringung von zusätzlichem Aktivator zudosiert. Nach 2 h wird der Reaktor entspannt, das Polymere aus der Suspension abfiltriert und 12 h im Vakuum-Trockenschrank getrocknet. Es resultieren 49,5 g Polyethylen mit einer VZ: 400 cm³/g und einer Schüttdichte von 0,120 kg/dm³. Der Reaktor zeigt keine Beläge an Reaktorwänden oder Rührer.

### Vergleichsbeispiel 1

Die Polymerisation aus Beispiel 1 wird wiederholt mit dem Unterschied, daß als Katalysator 0,029 mg Zirkonocendichlorid gelöst in einer 10 Gew.-% Lösung von Methylaluminoxan in Toluol (12 mmol Al) verwendet wird. Unter sonst gleichen Bedingungen entstehen 40 g Polyethylen mit einer VZ: 380 cm³/g und einer Schüttdichte von 0,060 kg/dm³. Nach Öffnen des Reaktors wird ein vollständiger Belag von 1 mm Dicke auf Reaktorwänden und Rührer sichtbar.

### Vergleichsbeispiel 2

Die Polymerisation aus Vergleichsbeispiel 1 wird wiederholt mit dem Unterschied, daß 40 ml der bei P-MAO überstehenden Toluollösung anstelle der 10 %igen Methylaluminoxanlösung eingesetzt wird. Unter sonst gleichen Bedingungen findet jedoch keine Polymerisation statt.

### Beispiel 2

Die Katalysatorherstellung aus Beispiel 1 wird wiederholt, mit dem Unterschied, daß statt mit Dieselöl (Sdp. 100 - 120°C) mit wasserfreiem Hexan gewaschen wird. Anschließend wird der Katalysator 2 h bei 10⁻³ mbar und 30°C getrocknet. Es resultieren 1,50 g eines frei fließenden Pulvers. Die Analyse ergibt 44,4 Gew.-% Al und 49 ppm Zr.
1400 mg des trockenen Katalysators werden mit 80 g Polystyrolpulver als Rührhilfe vermischt, und in einem 1,5 dm³-Reaktor mit Propeller-Rührer wird bei 70 °C und 7 bar Ethylen 2 h polymerisiert. Nach Entspannen des Reaktors werden 122 g Pulver entnommen und nach Extraktion mit siedendem Toluol 42 g eines Polyethylens mit einer VZ von 455 cm³/g gewonnen.

### Beispiel 3

20 ml Suspension des P-MAO werden unter Argon in eine G3-Schlenkfritte eingefüllt und abfiltriert. Der verbliebene Feststoff wird in 40 ml eines aromatenfreien inerten Dieselöls (Sdp. 100 bis 120°C) resuspendiert. 5 mg rac-Dimethylsilyl-bis-1-(2-methylindenyl)zirkoniumdichlorid werden in wenig Toluol gelöst und unter Argon zudosiert. Nach 15 min. wird die Lösung abfiltriert, der Feststoff mit Dieselöl gewaschen und abschließend mit 20 ml Dieselöl resuspendiert.

### Polymerisation

Ein trockener mit Stickstoff gespülter 16 dm³-Reaktor wird mit 10 dm³ Propylen gefüllt und auf 30°C temperiert. Nach 15 min wird über eine Druckschleuse die Katalysator-Suspension ohne weiteren Aktivator-Zusatz zudosiert. Bei Polymerisationsstart wird die Reaktorinnentemperatur durch zusätzliche Wärmezufuhr mit 10°/min auf 70°C Polymerisationstemperatur angehoben und anschließend durch Kühlen auf diese Temperatur geregelt. Nach 1 h Polymerisationszeit wird durch Zugabe von Isopropanol gestoppt, der Reaktor entspannt und geöffnet. Reaktorwand und Rührer sind vollständig frei von Belägen. Nach Vakuumtrocknung des Produkts werden 0,37 kg freifließendes Polypropylenpulver mit einer VZ von 154 cm³/g und einem Schmelzpunkt (DSC) von 143,1 °C erhalten. Der mittlere Korndurchmesser d₅₀ beträgt gemäß Siebanalyse 450 µm.

### Vergleichsbeispiel 3

Zur Herstellung des Katalysators werden 5,2 mg rac-Dimethylsilyl-bis-1-(2-methylindenyl)zirkoniumdichlorid in 20 cm³ toluolischer Methylaluminoxan-Lösung (entsprechend 27 mmol Al) gelöst und durch 15 minütiges Stehenlassen voraktiviert (vgl. EP-A 302 424).
Parallel hierzu wird ein trockener 16 dm³-Reaktor mit Stickstoff gespült und mit 10 dm³ flüssigem Propen befüllt. In diesen Reaktor werden 30 cm³ toluolische Methylaluminoxanlösung (entsprechend 40 mmol Al) gegeben und bei 30 °C 15 min. gerührt. Anschließend wird die Katalysatorlösung in den Reaktor gegeben, das Polymerisationssystem durch Wärmezufuhr auf die Polymerisationstemperatur T = 70 °C aufgeheizt (10°C/min) und 1 h durch Kühlung bei dieser Temperatur gehalten. Die Polymerisation wird dann durch Zugabe von 5 ml Isopropanol gestoppt und der Reaktor entspannt und geöffnet. Es zeigt sich ein vollständiger Belag von 3 mm Dicke. Nach Vakuumtrocknung des Produkts werden 1,3 kg Polypropylen mit einer VZ von 151 cm³/g und einem Schmelzpunkt (DSC) von 145 °C erhalten. Der mittlere Korndurchmesser d₅₀ beträgt gemäß Siebanalyse 350 µm.

### Beispiel 4

Es wird verfahren wie im Beispiel 3 mit dem Unterschied, daß als Metallocen 5,1 mg rac-Dimethylsilyl-bis-1-(2-methyl-4-ethylindenyl)zirkoniumdichlorid verwendet wird. Der Reaktor ist frei von Belägen an Wandungen und Rührer. Nach Vakuumtrocknung des Produkts werden 0,33 kg freifließendes Polypropylenpulver mit einer VZ von 184 cm³/g, M_{w} = 1,91 x 10⁵ g/mol, M_{w}/Mₙ = 2,3 und einem Schmelzpunkt (DSC) von 142,0 °C erhalten. Der mittlere Korndurchmesser d₅₀ beträgt gemäß Siebanalyse 650 µm, der Feinkornanteil (< 100 µm): 0,5 Gew.-%.

### Vergleichsbeispiel 4

Es wird verfahren wie im Vergleichsbeispiel 3 mit dem Unterschied, daß als Metallocen 4,4 mg rac-Dimethylsilyl-bis-1-(2-methyl-4-ethylindenyl)zirkoniumdichlorid verwendet werden. Nach der Polymerisation zeigt sich ein vollständiger Belag von 1 mm Dicke. Die Vakuumtrocknung des Produkts ergibt 1,1 kg Polypropylen mit einer VZ von 113 cm³/g, M_{w} = 1,02 x 10⁵ g/mol, M_{w}/Mₙ = 2,2 und einem Schmelzpunkt (DSC) von 145,1°C. Der mittlere Korndurchmesser d₅₀ beträgt gemäß Siebanalyse 3000 µm, der Feinkornanteil (< 100 µm): 1,2 Gew.-%.

### Beispiel 5

Es wird verfahren wie in Beispiel 3 mit dem Unterschied, daß als Metallocen 5,0 mg rac-Dimethylsilyl-bis-1-(2-methyl-4-i-propylindenyl)zirkoniumdichlorid verwendet werden. Der Reaktor ist frei von Belägen an Wandungen und Rührer. Nach Vakuumtrocknung des Produkts werden 0,32 kg freifließendes Polypropylenpulver mit einer VZ von 223 cm³/g, M_{w} = 2,55 x 10⁵ g/mol, M_{w}/Mₙ, = 2,5 und einem Schmelzpunkt (DSC) von 146,3°C erhalten. Der mittlere Korndurchmesser d₅₀ beträgt gemäß Siebanalyse 650 µm, der Feinkornanteil (< 100 µm): 0,5 Gew.-%.

### Vergleichsbeispiel 5

Es wird verfahren wie im Vergleichsbeispiel 3 mit dem Unterschied, daß als Metallocen 3,3 mg rac-Dmethylsilyl-bis-1-(2-methyl-4-i-propylindenyl)-zirkoniumdichlorid verwendet werden. Nach der Polymerisation zeigt sich ein vollständiger Belag von 1 mm Dicke. Die Vakuumtrocknung des Produkts ergibt 1,4 kg Polypropylen mit einer VZ von 165 cm³/g, M_{w} = 1,45 x 10⁵ g/mol, M_{w}/Mₙ = 2,2 und einem Schmelzpunkt (DSC) von 149,6°C. Der mittlere Korndurchmesser d₅₀ beträgt gemäß Siebanalyse 3000 µm, der Feinkornanteil (< 100 µm): 2,2 Gew.-%.

### Beispiel 6

Es wird verfahren wie im Beispiel 3 mit dem Unterschied, daß als Metallocen 30,4 mg Diphenylmethylen(9-fluorenyl)(cyclopentadienyl)zirkoniumdchlorid verwendet werden. Die Polymerisation erfolgt wie beschrieben, jedoch bei einer Polymerisationstemperatur T = 50°C. Der Reaktor ist frei von Belägen an Wandungen und Rührer. Nach Vakuumtrocknung des Produkts werden 0,31 kg freifließendes syndiotaktisches Polypropylenpulver mit einer VZ von 334 cm³/g, M_{w} = 3,13 x 10⁵ g/mol, M_{w}/Mₙ = 2,2 und einem Schmelzpunkt (DSC) von 119,5°C erhalten. Der mittlere Korndurchmesser d₅₀ beträgt gemäß Siebanalyse 250 µm.

### Vergleichsbeispiel 6

Es wird verfahren wie im Vergleichsbeispiel 3 mit dem Unterschied, daß als Metallocen 9,4 mg Diphenylmethylen(9-fluorenyl)(cyclopentadienyl)-zirkoniumdichlorid verwendet werden. Nach der Polymerisation zeigt sich ein vollständiger Belag von 2 mm Dicke. Die Vakuumtrocknung des Produkts ergibt 0,2 kg syndiotaktisches Polypropylen mit einer VZ von 502 cm³/g, M_{w} = 4,97 x 10⁵ g/mol, M_{w}/Mₙ = 2,2 und einem Schmelzpunkt (DSC) von 134,1°C. Der mittlere Korndurchmesser d₅₀ beträgt gemäß Siebanalyse 2500 µm. Herstellungsbeispiel für unlösliches MAO (P-MAO)

### Beispiel 7

Aus 5000 ml einer käuflichen Lösung von 10 Gew.-% MAO in Toluol bezogen von der Fa. Schering/Bergkamen wird der darin enthaltene Feststoffanteil (P-MAO) durch Sedimentieren und Filtration unter Inertbedingungen abgetrennt. Dieser Feststoff-Gehalt schwankt von Charge zu Charge, da dieser Anteil häufig als unerwünscht durch die Art der Abfüllung abgetrennt wird. Der Feststoffgehalt dieser Charge berechnet sich auf 7 Gew.-% P-MAO bezogen auf den MAO-Gehalt der Lösung. Dieser verbleibende Feststoff wird zweimal mit 100 ml Toluol und einmal mit 100 ml Hexan gewaschen. Anschließend wird der Feststoff im Vakuum bis zur Gewichtskonstanz getrocknet. Es verbleiben 35 g pulvriges P-MAO. Eine Aluminium-Bestimmung des Feststoffs ergab einen Gehalt von 44,9 Gew.-% Al im Feststoff und ein molares Verhältnis Al:CH₃ = 1:0,95.

8,88 g des getrockneten P-MAO werden in 50 ml Toluol suspendiert und 79 mg rac-Dimethylsilyl-bis-1-(2-methylindenyl)-zirkoniumdichlorid gelöst in 50 ml Toluol langsam unter Rühren zugetropft. Man rührt die Suspension anschließend für eine Stunde bei 80°C. Die Suspension wird bei Raumtemperatur filtriert und mit Hexan gewaschen. Das Filtrat ist farblos. Nach dem Trocknen im Vakuum verbleibt ein rosa-farbenes, frei fließendes Pulver.

### Polymerisation

Ein trockener mit Stickstoff gespülter 16 dm³-Reaktor wird mit 10 dm³ Propylen gefüllt und auf 30°C temperiert. Über eine Druckschleuse werden 24 mmol einer 20 % Lösung von Triisobutylaluminium (TIBA) in einem Dieselöl zur Inertisierung zudosiert. Nach 15 min werden 0,84 g des getrockneten Katalysators in 50 ml Hexan suspendiert über die Druckschleuse zudosiert. Bei Polymerisationsstart wird die Reaktorinnentemperatur durch zusätzliche Wärmezufuhr mit 10°C/min auf 70°C Polymerisationstemperatur angehoben und anschließend durch Kühlen auf diese Temperatur geregelt. Nach 1 h Polymerisationszeit wird durch Zugabe von Isopropanol gestoppt, der Reaktor entspannt und geöffnet. Reaktorwand und Rührer sind vollständig frei von Belägen. Nach Vakuumtrocknung des Produkts werden 0,25 kg freifließendes Polypropylenpulver mit einer VZ von 187 cm³/g und einem Schmelzpunkt (DSC) von 147,3°C erhalten.

## Patentansprüche

1. Katalysator für die Olefinpolymerisation, bestehend aus dem Reaktionsprodukt eines in aliphatischen und aromatischen Kohlenwasserstoffen unlöslichen Aluminoxans mit mindestens einem Metallocen.

2. Katalysator gemäß Anspruch 1, dadurch gekennzeichnet, daß das Aluminoxan die Summenformel AlOₐR_{b} hat, worin 0,5 ≦ a ≦ 1,3 und 0,5 ≦ b ≦ 2 ist, und R für gleiche oder verschiedene Reste steht und C₁₋ C₆-Alkyl, C₆-C₁₀-Aryl oder Benzyl bedeutet.

3. Katalysator gemäß Anspruch 1 oder 2, dadurch gekennzeichnet, daß das Aluminoxan ein C₁-C₄-Alkylaluminoxan ist.

4. Katalysator gemäß einem oder mehreren der Ansprüche 1 bis 3, dadurch gekennzeichnet, daß das Aluminoxan Methylaluminoxan ist.

5. Katalysator gemäß einem oder mehreren der Ansprüche 1 bis 4, dadurch gekennzeichnet, daß das Aluminoxan in Benzol oder Toluol unlöslich ist.

6. Katalysator gemäß einem oder mehreren der Ansprüche 1 bis 5, dadurch gekennzeichnet, daß bei seiner Herstellung ein Metallocen verwendet wird.

7. Katalysator gemäß einem oder mehreren der Ansprüche 1 bis 6, dadurch gekennzeichnet, daß das Metallocen ein Zirkonocen ist.

8. Verfahren zur Herstellung eines Katalysators gemäß einem oder mehreren der Ansprüche 1 bis 7, dadurch gekennzeichnet, daß man ein in aliphatischen und aromatischen Kohlenwasserstoffen unlösliches Aluminoxan mit mindestens einem Metallocen umsetzt.

9. Verfahren zur Herstellung eines Olefinpolymers durch Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, dadurch gekennzeichnet, daß ein Katalysator gemäß einem oder mehreren der Ansprüche 1 bis 7 verwendet wird.

## Claims

1. A catalyst for the polymerization of olefins, consisting of the product of the reaction of an aluminoxane which is insoluble in aliphatic and aromatic hydrocarbons, with at least one metallocene.

2. A catalyst as claimed in claim 1, wherein the aluminoxane has the empirial formula AlOₐR_{b} in which 0.5 ≦ a ≦ 1.3 and 0.5 ≦ b ≦ 2, and R is identical or different radicals and is C₁-C₆-alkyl, C₆-C₁₀-aryl or benzyl.

3. A catalyst as claimed in claim 1 or 2, wherein the aluminoxane is a C₁-C₄-alkylaluminoxane.

4. A catalyst as claimed in one of claims 1 to 3, wherein the aluminoxane is methylaluminoxane.

5. A catalyst as claimed in one or more of claims 1 to 4, wherein the aluminoxane is insoluble in benzene or toluene.

6. A catalyst as claimed in one or more of claims 1 to 5, prepared using a metallocene.

7. A catalyst as claimed in one or more of claims 1 to 6, wherein the metallocene is a zirconocene.

8. A process for the preparation of a catalyst as claimed in one or more of claims 1 to 7, which comprises reacting an aluminoxane which is insoluble in aliphatic and aromatic hydrocarbons with at least one metallocene.

9. A process for the preparation of an olefin polymer by polymerization or copolymerisation of an olefin of the formula R^{a}-CH=CH-R^{b}, in which R^{a} and R^{b} are identical or different and are a hydrogen atom or a hydrocarbon radical having 1 to 14 carbon atoms, or R^{a} and R^{b}, together with the atoms connecting them, can form a ring, at a temperature of from -60 to 200°C, at a pressure of from 0.5 to 100 bar, in solution, in suspension or in the gas phase, in the presence of a catalyst, which comprises using a catalyst as claimed in one or more of claims 1 to 7.

## Revendications

1. Catalyseur pour la polymérisation d'oléfines, constitué du produit de la réaction d'un aluminoxane insoluble dans les hydrocarbures aliphatiques et aromatiques avec au moins un métallocène.

2. Catalyseur selon la revendication 1, caractérisé en ce que l'aluminoxane a la formule brute AlOₐR_{b}, dans laquelle on a 0,5 ≦ a ≦ 1,3 et 0,5 ≦ b ≦ 2, et R représente des restes identiques ou différents et signifie alkyle en C₁-C₆, aryle en C₆-C₁₀ ou benzyle.

3. Catalyseur selon la revendication 1 ou 2, caractérisé en ce que l'aluminoxane est un (alkyl en C₁-C₄)aluminoxane.

4. Catalyseur selon l'une ou plusieurs des revendications 1 à 3, caractérisé en ce que l'aluminoxane est un méthylaluminoxane.

5. Catalyseur selon l'une ou plusieurs des revendications 1 à 4, caractérisé en ce que l'aluminoxane est insoluble dans le benzène ou le toluène.

6. Catalyseur selon l'une ou plusieurs des revendications 1 à 5, caractérisé en ce que l'on utilise un métallocène pour sa préparation.

7. Catalyseur selon l'une ou plusieurs des revendications 1 à 6, caractérisé en ce que le métallocène est un zirconocène.

8. Procédé de préparation d'un catalyseur selon l'une ou plusieurs des revendications 1 à 7, caractérisé en ce que l'on fait réagir un aluminoxane insoluble dans les hydrocarbures aliphatiques et aromatiques avec au moins un métallocène.

9. Procédé de préparation d'un polymère oléfinique par polymérisation ou copolymérisation d'une oléfine de formule R^{a}-CH=CH-R^{b}, dans laquelle R^{a} et R^{b} sont identiques ou différents et représentent un atome d'hydrogène ou un reste hydrocarboné de 1 à 14 atomes de carbone, ou bien R^{a} et R^{b} peuvent former un cycle avec les atomes qui les relient, à une température de -60 à 200°C, sous une pression de 0,5 à 100 bars, en solution, en suspension ou en phase gazeuse, en présence d'un catalyseur, caractérisé en ce que l'on utilise un catalyseur selon l'une ou plusieurs des revendications 1 à 7.
